# EUROPEAN PATENT APPLICATION

(11) **EP 1 477 339 A1**
(43) Date of publication of application: **17.11.2004**
(21) Application number: 03425309.6
(22) Date of filing: 14.05.2003
(51) Int. Cl.: B60D 1/46

(54) **Vertically movable towing device for a tractor and the like**

(71) Applicant: Costruzioni Meccaniche G. Grassi di Luigi Grassi & C. S.n.c., 27010 Albuzzano (Pavia) (IT)
(72) Inventor: Grassi, Luigi c/o Costruz.Meccaniche G.Grassi di, 27010 Albuzzano (Pavia) (IT); Sissa, Alessandro c/o Costruzione Mecc. G. Grassi, 27010 Albuzzano (Pavia) (IT)
(74) Representative: Zambardino, Umberto

(57) **Abstract**

A towing device (1) for a tractor (3) and the like comprises a slideway (4) attached to the tractor rear part (2), a slide (5) carrying a pull hook (15) and being slidably mounted on the slideway (4), as well as motor means (20) including a rotary motor (21a,21b) active on the slide (5) through a mechanical drive (22a,22b) having a drive screw (23a,23b) and a female-screw (24a,24b) for moving the pull hook (15) to a selected height without physical exertion for the operator and optionally by remote control, e.g. from the tractor driver station.

## Description

The present invention relates to a towing device for tractors and the like, of the type comprising a slideway attached to the tractor rear, and a slide carrying a pull hook, the slide being mounted slidably on the slideway for setting the pull hook at a selected height.

As it is known, the hook-carrying slide of towing devices can be set at a selected height along the slideway and retained there by a blocking mechanism. When the hook is to be moved to a different height, e.g. in order to bring at the level of the eye of a different vehicle to be towed, an operator releases the blocking mechanism and shifts the slide up or down as required to bring the hook approximately to a desired height, or, more precisely in a nearby position. The operator, after actuating the blocking mechanism, hitches up the towed vehicle. It will be appreciated that the operator is called upon to bear the full weight of the slide and hook throughout the slide shifting operation. This occurs not only when hte slide is to be raised, but even during the slide lowering, the latter operation requiring, in any case, a careful control.

In the past, in order to satisfy the need of varying the height of the slide, a proposal was that of subjecting the slide to the action of two hydraulic cylinders for shifting it without effort. However, in such a way, the arrangement was space-intensive in the very area of the universal joint driving, which is usually provided to transmit motion from tha tractor to the towed vehicle. Additionally thereto, the longitudinal dimension of the cylinders materially restricted the run length that the slide was allowed along the slideway.

More recently, in Patent Application EP 1 312 491 by this Applicant, the way to lighten the combined weight of the slide and hook by the use of two thin air cylinders has been described. Although advantageous on several counts and effectively easing the operator's effort, this prior approach involves some dexterity.

This solution has been forcedly accepted for a long time and the operators, whenever it is necessary to vary height of the hook, undergo strong efforts, overtaxing the operator(s) with the need to apply him(them)selves to holding up the slide with fair accuracy at a selected height before the blocking mechanism can be actuated.

The underlying problem of this invention is to provide a towing device as indicated with appropriate construction and functional features to fill the above demands and overcome the limitations of the prior art.

This problem is solved by a towing device as indicated being characterized in that it includes a rotary motor connected to the slide by a mechanical drive for moving the slide along its slideway.

Further features and advantages of a towing device according to the invention should become apparent from the following description of an embodiment thereof, given by way of non-limitative example with reference to the accompanying drawings, in which:

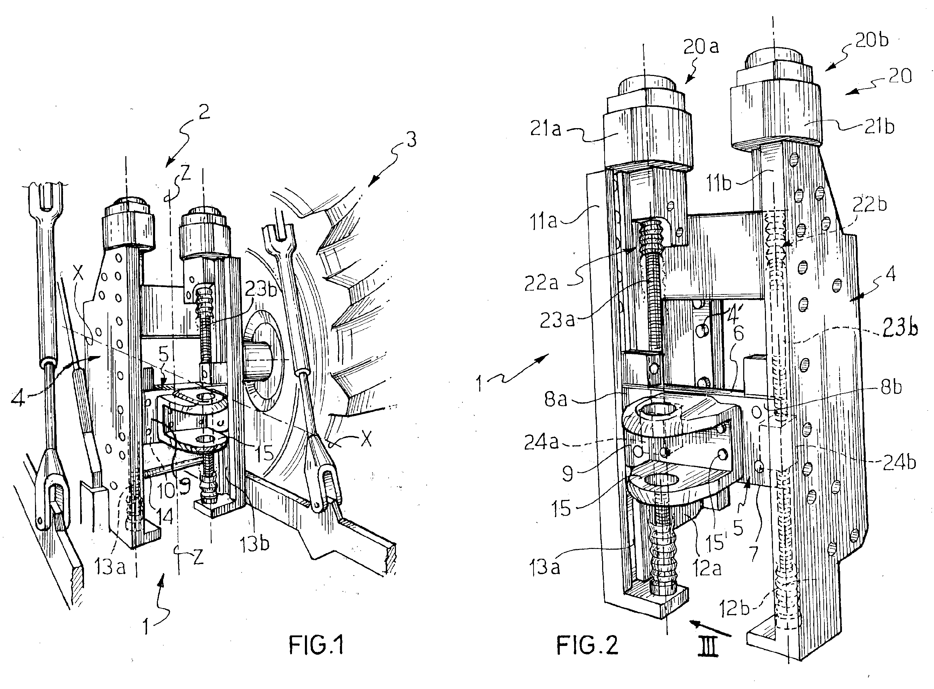

Figure 1 is a perspective view of a towing device according to the invention, for use with tractors and the like;
Figure 2 is an enlarged perspective view of the towing device shown in Figure 1, as viewed from a different angle;

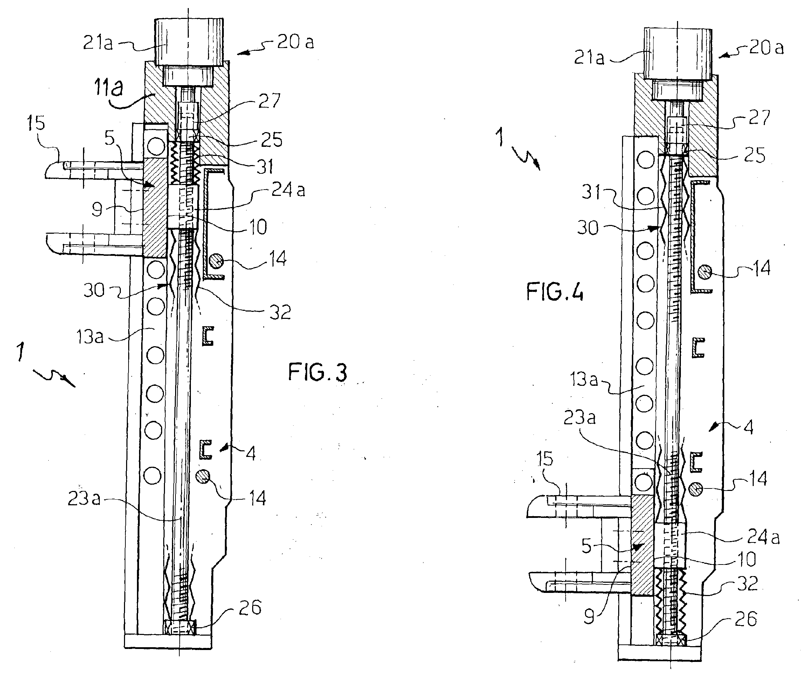

Figure 3 is a partial, sectional side view, taken along arrow III, of the device shown in Figure 1;
Figure 4 is a partial, sectional side view of the device of Figure 1 shown at a different stage of its operation;
Figure 5 is a schematical view of a detail of the towing device of fig. 1 and, in particular, the scheme of a hydraulic system diagram to complete it; and
Figure 6 is a schematic view of a detail of the towing device of fig. 1, and, in particular, of a hydraulic system diagram to complete it, according to a modified embodiment of the invention.

With reference to the drawings, 1 globally stands for a towing device, which is attached to the rear 2 of a tractor 3. The tractor being shown only partially and having a horizontal, longitudinal axis X-X.

This towing device 1 comprises a slideway 4 and a slide 5. The slideway 4 is attached with screw fasteners 4^{I} to the tractor rear 2 and extends along a vertical direction Z-Z. The slide 5 is in the form of a rectangular plate lying perpendicularly to the longitudinal axis X-X and having a horizontal top side 6, a horizontal bottom side 7, and opposite vertical sides 8a, 8b. The slide 5 has a front 9 and a back 10 face. It should be noted that the towing device 1 being described hereinafter is substantially symmetrical with respect to a vertical plane passing through the axis X-X.

The slide 5 is slidably mounted in the slideway 4, which embraces and retains, with its side portions 11a, 11b, the sides 8a, 8b.

More particularly, the side portions 11a, 11b have, at respective inner faces 12a, 12b, vertical guide grooves 13a, 13b wherein sides 8a, 8b of the slide 5 are slidably engaged.

The side portions 11a, 11b of the slideway 4 are firmly held together by crosspieces 14. The side portions 11a and 11b are spaced apart from one another to leave a passage therebetween for a driveshaft, usually connected to a towed implement or vehicle through a universal joint. A conventional pull hook 15 of the bellmouth type is carried by the slide 5, at its front face 9, to which it is attached by screw fasteners 15', the hook 15 being adapted to receive a towing eye of the towed vehicle, e.g. an agricultural implement (not shown).

According to the invention, the towing device 1 includes a power means, globally shown at 20 and acting on the slide 5 to shift the hook 15 as required along a direction z-z.

In particular, the power means 20 include two groups 20a and 20b, each comprising a rotary motor 21a (2 1 b) acting on the slide 5 through a mechanical drive 22a (22b).

Each mechanical drive 22a (22b) includes a couple of kinematical elements, a driving element and a driven one. At least one of these elements spans the length of the slideway.

In particular, each mechanical drive 22a (22b) comprises a screw 23a (23b), rotated by the motor 21a (21b), and a female-screw 24a (24b) screwly engaged with the screw.

The motor 21a (21b) and screw 23a (23b) are associated with the slideway 4, and the female-screw 24a (24b) is associated with the slide 5.

The screw 23a (23b) substantially spans along the whole length of the slideway to provide maximum run length for the slide and forms the driving, kinematical element, whereas the female-screw 24a (24b) forms the driven, kinematical element.

Each motor 21a (21 b) is attached to the top of a respective side portion 11a (11b), with its screw 23a (23b) lying adjacent to the side portion itself. The respective female-screw 24a (24b) is attached to the back 10 of the slide 5.

The screw 23a (23b) and the female-screw 24a (24b) form an irriversible pair. A thin drive screw with trapezoidal threads of small diameter, e.g. 24 mm, has proved adequate. Each screw is supported at its ends by bearings 25, 26 and rotably connected to the respective motor or more exactly with its shaft by a box coupling 27. Each screw is protected from dust and the like by a respective protection 30, advantageously a bellows one, divided in a protection portion 31 extended between the motor and the female-screw, and a protection portion 32 extending between the female-screw and the end bearing.

The rotary motor is a fluid-operated motor, in particular an oil-operated motor with a 200 cc displacement. In the example shown, the motor is a GWS 200 orbital motor. Pressurized oil is supplied to the motors from a source of pressurized oil, such as an oil hydraulic system comprising a pump unit and oil lines for connecting motors to the unit.

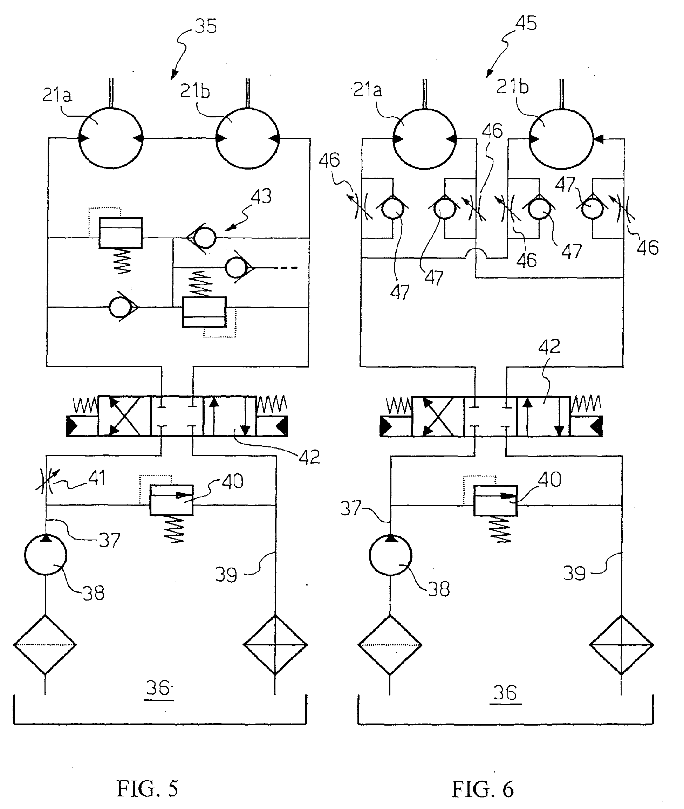

In Particular, with reference to figure 5, the motors are supplied in series through a hydraulic circuit 35. The hydraulic circuit 35 comprises a tank 36, a delivery branch 37 with a pump 38, and a discharge branch 39. A pressure control valve is shown with 40, and a flow control valve with 41. A directional valve 42 is provided to supply the series-connected motors for alternately raising and lowering the slide. A cavitation preventer group 43 is provided between the dirctional valve and the motors.

In a modified embodiment shown in Figure 6, the motors are supplied in parallel from a hydraulic circuit 45, wherein parts that are structurally and functionally equal to those of the circuit 35 carry the same numeral references. The hydraulic system 45 includes one-way flow control valves 46, one for each mouth of each motor, and provided with respective bypass valves 47.

It should be noted that at least in part the hydraulic circuit 35, as well as 45, can make use of the hydraulic system usually on board of the tractor.

During operation, the operator controls the slide while moved up or down, preferably double-acting from the tractor driver station on the directional valve and releasing the valve in its neutral position of retention once the slide is brought to the desired height. Thanks to irriversibility of the screw/female-screw drive, the position attained is anyway permanently kept until the double-acting valve is again operated.

A major advantage of the towing device of the invention is that of adjusting the slide height without physical exertion by the operator.

Another advantage is that the operator can control the slide remotely, in particular without leaving the tractor driver station.

A consequent advantage of importance is that the slide can be shifted also when the pull eye of the vehicle to be towed is held by the hook, so that the vehicle to be towed can leaned by simply varying the height of the hook.

Another important advantage is that the device of the invention is uniquely compact and thus leaves the maximum space for the universal joint transmission and does not restrict the slide travel.

In addition, the invention provides faster up/down movements and an accurate vertical setting of the slide.

A further advantage of this towing device is its simple construction, and consequent long service-free life expectation comparable to that of the tractor itself.

Absolute reliability of operation is an important advantage to be considered. Thanks to the irreversibility of the mechanical coupling screw/ female-screw no undesired shift of the slide from its selected position are to be expected, neither gradual even in the long run, nor sudden and snap, due to failures in the hydraulic system (leaky seals, blown hoses).

It should be understood that the skilled person in the art may make changes and modifications unto the towing device described above, in order to satisfy contingent on individual requirements, without departing from the scope of the invention as defined in the following claims.

## Claims

1. A towing device (1) for a tractor (3) and the like, of the type comprising a slideway (4) attached to a tractor (3) rear part (2), and a slide (5) carrying a pull hook (15), said slide being slidably mounted on the slideway (4) for setting the pull hook (15) at a selected height, **characterized in that** it includes a rotary motor (21a,21b) active on the slide (5) through a mechanical drive (22a,22b) for moving the slide (5) along its slideway (4).

2. A towing device (1) according to Claim 1, **characterized in that** the mechanical drive (22a,22b) comprises a screw (23a,23b), rotated by the motor (21a,21b), and a female-screw (24a,24b).

3. A towing device (1) according to Claim 2, **characterized in that** the motor (21a,21b) and the screw (23a,23b) are associated with the slideway (4) and the female-screw (24a,24b) is associated with the slide (5).

4. A towing device (1) according to Claim 2, **characterized in that** the screw (23a,23b) and the female-screw (24a,24b) form an irreversible pair.

5. A towing device (1) according to Claim 1, **characterized in that** the motor (21a,21b) is a hydraulic motor supplied through a source of pressurized oil by means of a hydraulic system (35,45).

6. A towing device (1) according to Claim 5, **characterized in that** the source of pressurized oil is a hydraulic pump (38) provided to the tractor.

7. A towing device (1) according to Claim 6, **characterized in that** said motors are two, substantially identical, each one attached to the top of a respective side portion (11a,11b) of the slideway (4) and provided with a screw substantially extended on all the length of the side portion itself.

8. A towing device (1) according to Claim 7, **characterized in that** the two hydraulic motors are supplied in series.

9. A towing device (1) according to Claim 8, **characterized in that** it includes a cavitation preventer group (43) on the hydraulic circuit (35) supplying the motors.

10. A towing device (1) according to Claim 7, **characterized in that** the two hydraulic motors are supplied in parallel.

11. A device according to Claim 10, **characterized in that** the hydraulic motors are supplied through respective flow control valves (46).

12. A towing device (1) according to Claim 2, **characterized in that** it includes protection means (30) for the drive screw (23a,23b).

13. A towing device (1) according to Claim 12, **characterized in that** said protection means (30) comprise bellows.

14. Motor means (20) for a slide (5) carrying a pull hook (15), said slide being vertically movable along a slideway (4) of a towing device for a tractor and the like, comprising at least one rotary motor (21a,21b) associated with the slideway (4), a screw (23a,23b) rotated by the motor (21a,21b), and a female-screw (24a,24b) associated with the slide (5).
